# EUROPÄISCHE PATENTSCHRIFT

(11) **EP 0 698 527 B1**
(45) Veröffentlichungstag und Bekanntmachung des Hinweises auf die Patenterteilung: **31.03.1999**
(21) Anmeldenummer: 95109872.2
(22) Anmeldetag: 24.06.1995
(51) Int. Cl.: B60Q 1/14

(54) **Schaltereinrichtung für die Beleuchtungsanlage von Kraftfahrzeugen**
Switching device for vehicle lighting
Dispositif d'interrupteur pour installation d'éclairage de véhicule

(30) Priorität: 26.08.1994 DE 4430279
(43) Veröffentlichungstag der Anmeldung: 28.02.1996
(73) Patentinhaber: Bayerische Motoren Werke Aktiengesellschaft, 80788 München (DE)
(72) Erfinder: Wagner, Armin, D-85757 Karlsfeld (DE); Bilz, Frank, D-80634 München (DE)

(56) Entgegenhaltungen:
- EP-A- 0 586 734
- US-A- 5 030 938

## Beschreibung

Die Erfindung bezieht sich auf eine Schalteinrichtung für die Beleuchtungsanlage von Kraftfahrzeugen mit den Merkmalen des Oberbegriffs von Patentanspruch 1.

Eine derartige Schalteinrichtung ist aus der DE 38 34 390 C1 bekannt. Dabei besitzt die Schalteinrichtung als Hauptschalter einen Druckschalter mit einem Steuerglied, das mit einer Steuerkulisse zusammenwirkt. Die Steuerkulisse besitzt quer zu den Betätigungsrichtungen des Steuerglieds verlaufende Profilbahnen, die bei einer Verstellung des Steuerglieds in der einen Betätigungsrichtung eine Verstellung zwangsweise in der anderen Betätigungsrichtung hervorrufen. Damit werden gleichzeitig radiale und axiale Verstellungen realisiert und der Drehschalter in die zulässigen Schaltstellungen zwangsgeführt. Diese Schalteinrichtung ist konstruktiv aufwendig und baut groß und schwer.

Der Erfindung liegt die Aufgabe zugrunde, eine Schalteinrichtung der eingangs genannten Art zu schaffen, die sich durch einen einfachen Aufbau, geringes Gewicht und kleines Volumen auszeichnet.

Die Erfindung löst diese Aufgabe durch die kennzeichnenden Merkmale des Patentanspruchs 1.

Mit Hilfe des Hauptschalters werden nun nicht mehr Lastströme, sondern nur noch wesentlich kleinere Steuerströme geschaltet. Diese Steuersignale werden mit Hilfe der Entscheidungslogik in die Schaltbefehle für die Lastschalter umgesetzt und durch die Lastschalter die Beleuchtungseinrichtung geschaltet.

Ihre Überlegenheit zeigt die erfindungsgemäße Schalteinrichtung dann, wenn die Entscheidungslogik programmierbar ist. Es ist dann beispielsweise möglich, bei Ausfall einer Beleuchtungsvorrichtung deren Funktion einer anderen Beleuchtungsvorrichtung zuzuweisen, sofern deren eigentliche Funktion nicht benötigt wird bzw. von untergeordneter Bedeutung ist. Dieser Grundgedanke geht beispielsweise aus der DE 41 20 893 A1 hervor.

Weiter kann es von Vorteil sein, wenn die Entscheidungslogik entsprechend den unterschiedlichen nationalen Gesetzgebungen für die Beschaltung der Beleuchtungseinrichtungen programmierbar ist. Mit Hilfe einer zunächst nicht programmierten Schalteinrichtung wird es möglich, diese entsprechend den jeweiligen nationalen Gegebenheiten auszubilden. So ist es beispielsweise auch möglich, die beispielsweise in USA notwendigen seitlichen Blinker leuchten als Parkleuchten zu verwenden. Dies geschieht mit ein und derselben Glühlampe in den zugehörigen Beleuchtungskörpern. Die Erstellung mechanischer Steuerkulissen für die jeweiligen Länder ist dabei überflüssig.

Die Programmierung selbst kann beispielsweise bei der Fertigung des Kraftfahrzeugs (Band Ende-Programmierung) und/oder auch während des Betriebs des Kraftfahrzeugs erfolgen. Es ist möglich, bei Überschreiten einer Ländergrenze das Land beispielsweise mit Hilfe eines Bordcomputers einzugeben und die Programmierung der Entscheidungslogik davon abhängig zu verändern.

Es ist ferner möglich, das Überschreiten einer Landesgrenze mit Hilfe eines bordeigenen Navigationssystems oder aber mit Hilfe eines an der Landesgrenze ausgesandten Funksignals zu registrieren und in eine entsprechende Änderung der Programmierung der Entscheidungslogik umzusetzen. Die Schalteinrichtung bietet dann den Vorteil, im jeweiligen Land mit den jeweils vorgeschriebenen Beleuchtungseinrichtungen bzw. deren Beschaltung ausgerüstet zu sein. Für den Fahrzeugbenutzer ändert sich hinsichtlich der Bedienung der Schalteinrichtung nichts.

Weitere vorteilhafte Ausgestaltungen sind Gegenstand der Patentansprüche 3 bis 5.

So zeigt der Patentanspruch 3 eine Möglichkeit, den elektrischen Ausbau der Schalteinrichtung zu vereinfachen. Durch die Übernahme der Funktion der elektrischen Sicherung durch die Lastschalter selbst können gesonderte elektrische Sicherungen entfallen.

Durch das Zusammenspiel von Entscheidungslogik und Lastschaltern, wie im Patentanspruch 4 angegeben, kann bei jeder Wiederinbetriebnahme des Kraftfahrzeugs die normale Funktion der Beleuchtungsanlage wiederhergestellt werden, sofern bis dahin ein ggf. vorhandener Fehler behoben ist. Anderenfalls wird die Absicherung mit Hilfe des Lastschalters wieder vorgenommen.

Die Merkmale des Patentanspruchs 5 dienen dazu, die Anwendungsmöglichkeiten der Schalteinrichtung weiter zu vergrößern. Zusätzlich zum Drehschalter sollen Tastschalter vorgesehen sein, mit denen ebenfalls Steuersignale in die Entscheidungslogik abgegeben werden können. Mit Hilfe dieser Tastschalter ist es möglich, beispielsweise die Funktion des Nebellichts oder aber einer Leuchtweiten-Steuerung zu realisieren. Diese durch die Tastschalter zusätzlich eingestellten Beleuchtungsfunktionen sollen aber nur dann tatsächlich ausgeführt werden, wenn dies zulässig ist, d.h. die Programmierung der Steuerlogik dies zuläßt.

Schließlich zeigt der Patentanspruch 6 eine Möglichkeit, das für die wesentlichen Elemente der Schalteinrichtung erforderliche Bauvolumen gering zu halten. Durch die Integration der einzelnen Elemente in einem gemeinsamen Gehäuse lassen sich Leitungen einsparen und auch Hilfsfunktionen, wie die Beleuchtung des Drehschalters, der Tastschalter und ggf. den Einstellungen dieser Schalter zugeordneter Symbole in der Oberfläche des Gehäuses mit geringem Aufwand realisieren.

Die Erfindung ist anhand der Zeichnung weiter erläutert. Es zeigt
- Fig. 1: die Frontansicht einer erfindungsgemäßen Schalteinrichtung und
- Fig. 2: die schaltungstechnische Realisierung der Schalteinrichtung von Fig. 1.

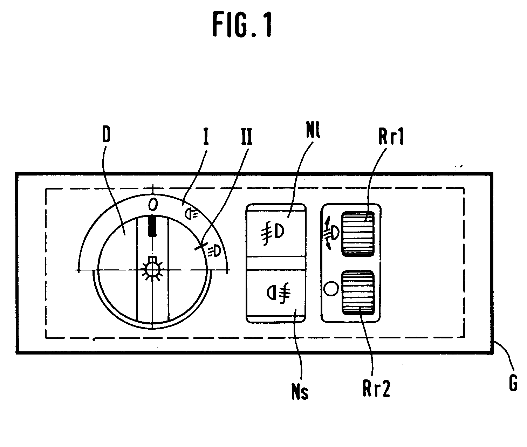

Die in Fig. 1 gezeigte Schalteinrichtung enthält in einem Gehäuse G einen Drehschalter D für Beleuchtungsgrundfunktionen, zwei Tastschalter NL und NS für Nebellicht vorne und Nebellicht hinten sowie zwei Rändelräder Rr1 und Rr2 für die Einstellung der Leuchtweite bzw. die Helligkeit der Armaturenbrettbeleuchtung.

Der Drehschalter D ist von seiner mit 0 bezeichneten Grundstellung aus in zwei Lagen I und II einstellbar. Die Tatschalter Nl und Ns kehren nach ihrer Betätigung wieder in die Ausgangslage zurück. Die Rändelräder Rr1 und Rr2 sind zwischen zwei Anschlägen verstellbar.

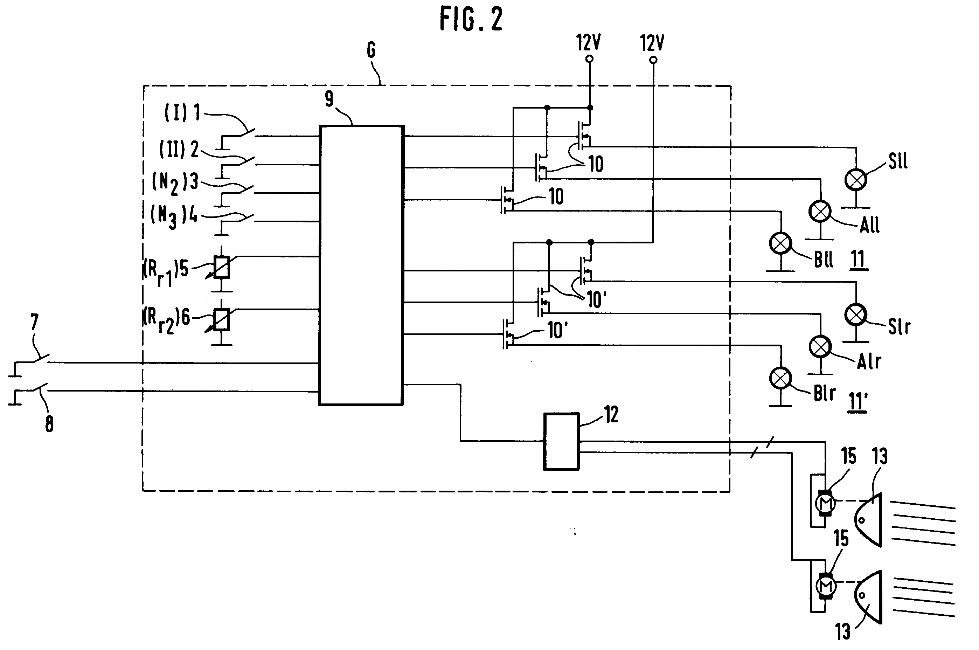

Mit Hilfe des Drehschalters, der Tastschalter und der Rändelräder werden Steuerströme geschaltet bzw. gesteuert, wie in Fig. 2 dargestellt. In den Schaltstellungen I und II sowie durch die Tastschalter Nl und Ns werden Steuerschalter 1 bis 4 betätigt, mit den Rändelrädern Rr1 und Rr2 werden Potentiometer 5 und 6 verstellt. Den Elementen 1 bis 6 ist eine Entscheidungslogik 9 nachgeschaltet, die die verschiedenen Beleuchtungsfunktionen des Kraftfahrzeugs steuert. Hierzu sind zusätzlich externe Steuerschalter 7 und 8 für die Warnblink- bzw. Fernlichtfunktion sowie weitere Steuerschalter für die Blinkerfunktion vorhanden.

Die Entscheidungslogik 9 ist programmierbar. Die Programmierung bezieht sich sowohl auf die Beleuchtungsgrundfunktion wie Standlicht und Abblendlicht als auch auf die Beschaltung der Beleuchtungskörper im Fehlerfalle oder aber entsprechend der nationalen Gesetzgebung.

Im einzelnen wird durch die Entscheidungslogik eine Reihe von Beleuchtungskörpern 11 und 11' durch Ansteuerung vorgeschalteter Leistungsschalter 10 und 10' geschaltet. Die Leistungsschalter 10 und 10' sind zu zwei Gruppen zusammengefaßt, die individuell am Bordnetz angeschlossen sind.

Bei den Beleuchtungsvorrichtungen handelt es sich um Glühllampen Sll und Slr für das Standlicht auf der linken und rechten Fahrzeugseite, All und Alr für das Abblendlicht links und rechts und Bll und Blr für das Blinklicht links und rechts. Nicht dargestellt sind weitere Glühlampen für das Fernlicht, die seitlichen Begrenzungsleuchten, das Nebellicht vorne und hinten usw.

Bei ordnungsgemäßer Funktion wird in der Stellung I des Drehschalters D das Standlicht Sll und Slr durch Ansteuerung der zugehörigen Lastschalter 10 durch die Entscheidungslogik 9 eingeschaltet. Entsprechend wird in der Stellung II das Abblendlicht All und Alr eingeschaltet. Entsprechendes gilt durch Betätigen des nicht dargestellten Blinkerschalters für das linke oder rechte Blinklicht, den Steuerschalter 8 für das Fernlicht bzw. durch Betätigen des Steuerschalters 7 zum Auslösen der Warnblinkfunktion durch gleichzeitiges Einschalten der linken und rechten Blinkleuchten Bll und Blr. Zusätzlich sind Stellmotoren 15 dargestellt, die durch einen Treiber 12 angesteuert werden und mit denen die Leuchtweite der schematisch dargestellten Scheinwerfer 13 verstellt wird. Die in diesen Scheinwerfern enthaltenen Beleuchtungskörper, z. B. Sll und All bzw. Slr und Alr sind der Übersichtlichkeit halber separiert dargestellt.

Die Entscheidungslogik 9 ist programmierbar. Damit wird es möglich, sowohl den jeweiligen landestypischen Anforderungen an die Beleuchtungsanlage des Kraftfahrzeugs Rechnung zu tragen, als auch im Fehlerfall Notmaßnahmen durchzuführen. Die eingeschalteten und/oder defekten Leuchten bzw. Beleuchtungsfunktionen können durch die Entscheidungslogik 9 getrennt in einem Display (nicht dargestellt) angezeigt werden. Fällt beispielsweise das Fernlicht auf einer Seite aus, so kann die Standlicht-Glühlampe Slr bzw. Sll derselben Seite diese Funktion zumindest teilweise übernehmen. Hierzu wird der zugehörige Lastschalter im Sinne einer Vergrößerung der Ausgangsleistung angesteuert.

Fällt eine Standlicht-Glühlampe Sll bzw. Slr aus, so kann in der Stellung I des Drehschalters die Abblendlicht-Glühlampe All bzw. Alr derselben Seiten mit verringerter Leistung betrieben werden. Der zugehörige Lastschalter wird im Sinne einer Leistungsverminderung angesteuert. Wird die Warnblinkfunktion ausgelöst, so können die Blinkleuchten Bll und Blr mit einer Taktfrequenz angesteuert werden, die gleich der doppelten Taktfrequenz im Blinkerbetrieb ist.

Wird das Kraftfahrzeug in einem Land betrieben, in dem bei der Fahrt stets eine Außenbeleuchtung, beispielsweise das Abblendlicht einzuschalten ist, so kann auch ohne Betätigung des Drehschalters dieser Betrieb durch die Entscheidungslogik ausgelöst werden. Diese ist dann so programmiert, daß sie bei geschlossenem Zündkreis (nicht dargestellt) bzw. während einer Fahrt die AbblendlichtGlühlampen All und Alr mittels der zugehörigen Lastschalter 10 und 10' einschaltet. Der Übergang in der Betriebsweise der Beleuchtungsanlage kann durch entsprechende Programmierung der Steuerlogik 9 in Verbindung mit dem Erkennen eines Grenzübertritts vorgenommen werden. Das Erkennen erfolgt beispielsweise mit Hilfe eines Navigationssystems (nicht dargestellt) selbsttätig und für den Fahrzeugbenutzer unbemerkt.

Damit wird es möglich, mit ein und derselben Schalteinrichtung den verschiedenen Anforderungen an die Beleuchtungsanlage eines Kraftfahrzeugs gerecht zu werden.

## Patentansprüche

1. Schalteinrichtung für die Beleuchtungsanlage von Kraftfahrzeugen, mit einem Hauptschalter (D), der in verschiedenen definierten Lagen einstellbar ist und mit Mitteln, die angeschlossenen elektrischen Beleuchtungseinrichtungen (11, 11') entsprechend den Einstellungen des Hauptschalters zu beschalten, dadurch gekennzeichnet, daß der Hauptschalter (D) in seiner Drehlage (0, I, II) voneinander unterscheidbare Steuersignale liefert, daß die Steuersignale auf eine Entscheidungslogik (9) geführt sind und daß die Beleuchtungseinrichtungen (11, 11') durch von der Entscheidungslogik (9) ansteuerbare Lastschalter (10, 10') schaltbar sind.

2. Schalteinrichtung nach Anspruch 1, dadurch gekennzeichnet, daß die Entscheidungslogik (9) programmierbar ist.

3. Schalteinrichtung nach Anspruch 2, dadurch gekennzeichnet, daß die Entscheidungslogik (9) entsprechend den unterschiedlichen nationalen Gesetzgebungen für die Beschaltung der Beleuchtungseinrichtungen (11, 11') programmierbar ist.

4. Schalteinrichtung nach einem der Ansprüche 1 bis 3, dadurch gekennzeichnet, daß die Lastschalter (10, 10') im Fehlerfall durch die Entscheidungslogik (9) im Sinne einer elektrischen Sicherung angesteuert sind.

5. Schalteinrichtung nach Anspruch 4, dadurch gekennzeichnet, daß die Lastschalter (10, 10') bei Wiedereinschalten des Bordnetzes für die kurzzeitige Einschaltung der Beleuchtungseinrichtungen (11, 11') angesteuert sind.

6. Schalteinrichtung nach einem der Ansprüche 1 bis 5, dadurch gekennzeichnet, daß Zusatzschalter (7, 8) vorgesehen sind, die ebenfalls Steuersignale an die Entscheidungslogik (9) für die Beschaltung zusätzlicher Beleuchtungseinrichtungen liefern.

7. Schalteinrichtung nach einem Ansprüche 1 bis 6, dadurch gekennzeichnet, daß der Hauptschalter, die Entscheidungslogik (9), die Lastschalter und ggf. die Zusatzschalter in einem gemeinsamen Gehäuse angeordnet sind.

## Claims

1. A switching system for lighting of vehicles, comprising a main switch (D) adjustable in various defined positions and means for switching the connected electric lighting systems (11 11'), in accordance with the adjustments of the main switch, characterised in that the main switch (D) delivers different control signals depending on the position (0, I, II) into which it has been rotated, the control signals are directed towards a decision logic unit (9) and the lighting systems (11 11') are switchable by on-load switches (10, 10') actuated by the decision logic unit (9).

2. A switching system according to claim 1, characterised in that the decision logic unit (9) is programmable.

3. A switching system according to claim 2, characterised in that the decision logic unit (9) is programmable in accordance with the various national regulations for wiring of lighting systems (11, 11').

4. A switching system according to any of claims 1 to 3, characterised in that in the event of a fault the on-load switches (10, 10') are actuated by the decision logic unit (9), which acts as a fuse.

5. A switching system according to claim 4, characterised in that when the vehicle electrical system is switched on again, the on-load switches (10, 10') are actuated so as briefly to switch on the lighting systems (11, 11').

6. A switching system according to any at claims 1 to 5, characterised in that additional switches (7, 8) are provided and also deliver control signals to the decision logic unit (9) for wiring additional lighting systems.

7. A switching system according to any of claims 1 to 6, characterised in that the main switch, the decision logic unit (9), the on-load switches and the additional switches, if any, are disposed in a common casing.

## Revendications

1. Dispositif de commande pour l'installation d'éclairage de véhicules à moteur, avec un interrupteur principal (D), qui peut être réglé dans différentes positions définies et avec des moyens, pour brancher les installations électriques raccordées d'éclairage (11, 11') en fonction des positions de réglage de l'interrupteur principal,
caractérisé en ce que
• l'interrupteur principal (D) délivre dans sa position de rotation (0, I, II) des signaux de commande que l'on peut différencier les uns des autres ,
• les signaux de commande sont amenés à un circuit logique de décision (9) et
• on peut brancher les dispositifs d'éclairage (11, 11') au moyen d'interrupteurs sous charge (10, 10') qui peuvent être commandés par le circuit logique de décision (9).

2. Dispositif de commande selon la revendication 1,
caractérisé en ce que
le circuit logique de décision (9) peut être programmé.

3. Dispositif de commande selon la revendication 1,
caractérisé en ce que
le circuit logique de décision (9) peut être programmé en fonction des différentes prescriptions légales nationales en matière de branchement des dispositifs d'éclairage (11,; 11').

4. Dispositif de commande selon l'une des revendications 1 à 3,
caractérisé en ce que
les interrupteurs sous charge (10, 10') sont commandés en cas de défaut par le circuit logique de décision (9) dans le sens assurant une protection électrique.

5. Dispositif selon la revendication 4,
caractérisé en ce que
les interrupteurs sous charge (10, 10') sont commandés lors du rebranchement du réseau de bord pour le bref branchement des dispositifs d'éclairage (11, 11').

6. Dispositif de commande selon l'une des revendications 1 à 5,
caractérisé en ce que
l'on prévoit des interrupteurs additionnels (7, 8) qui délivrent également des signaux de commande au circuit logique de décision (9) pour le branchement de dispositifs d'éclairage additionnels.

7. Dispositif de commande selon l'une des revendications 1 à 6,
caractérisé en ce que
l'interrupteur principal, le circuit logique de décision (9), les interrupteurs sous charge et le cas échéant les interrupteurs additionnels sont disposés dans un même boîtier.
